# FASCICULE DE BREVET EUROPEEN

(11) **EP 1 000 883 B1**
(45) Date de publication et mention de la délivrance du brevet: **08.09.2004**
(21) Numéro de dépôt: 99390021.6
(22) Date de dépôt: 22.10.1999
(51) Int. Cl.: B65G 47/38

(54) **Dispositif de convoyage de produits, notamment de fruits**
Fördervorrichtung für Produkte, insbesondere Früchte
Conveyor device for products, in particular fruits

(30) Priorité: 13.11.1998 FR 9814278
(43) Date de publication de la demande: 17.05.2000
(73) Titulaire: Matériel pour l' Arboriculture Fruitière, 82000 Montauban (FR)
(72) Inventeur: Blanc, Philippe, 82000 Montauban (FR)
(74) Mandataire: Cabinet BARRE LAFORGUE & associés

(56) Documents cités:
- WO-A-93/09772
- FR-A- 2 716 874
- US-A- 4 586 613

## Description

L'invention concerne un dispositif de convoyage de produits, notamment de fruits, adapté pour assurer le transport desdits produits et leur évacuation sélective au niveau de zones de déchargement, et comprenant :
- une pluralité de mains de convoyage articulées sur des supports portés par une chaîne sans fin longitudinale, et dotées d'organes de maintien desdites mains de convoyage dans une position de transport des produits,
- des moyens de déclenchement adaptés pour engendrer de façon sélective le basculement des mains de convoyage en vue de l'évacuation des produits portés par celles-ci dans une des zones de déchargement,

De tels dispositifs de convoyage sont d'une utilisation courante à l'heure actuelle dans le domaine de l'arboriculture et sont classiquement intégrés dans des unités de tri comprenant une zone de chargement des fruits, des moyens d'analyse et/ou de pesée desdits fruits, et des zones de déchargement de ces fruits dans lesquelles ces derniers sont évacués de façon sélective en fonction des critères de sélection retenus.

Une telle unité de tri est notamment décrite dans le brevet français FR-A-2.716.874 et comprend un dispositif de convoyage comportant une chaîne sans fin portant deux séries de supports en vis-à-vis, sur chacun desquels est articulée une main de convoyage dotée d'une barre centrale transversale de part et d'autre de laquelle sont répartis des doigts longitudinaux.

Bien que de tels dispositifs de convoyage présentent actuellement une très bonne fiabilité, ils s'avèrent d'une relative complexité, résultant par exemple de la conception des organes de déclenchement des mains de convoyage portés par les supports, ou de la disposition de ces supports montés de part et d'autre des chaînes sans fin et qui obligent notamment à prévoir une structure porteuse apte à accepter les différences de chargement des deux lignes de convoyage portées par une même chaîne sans fin.

Concernant les organes de déclenchement des mains de convoyage, notamment, ces derniers sont en effet constitués de nombreuses pièces en mouvement dont le vieillissement et l'usure conduisent à des coûts de maintenance relativement élevés et à des arrêts de fonctionnement fréquents.

La présente invention vise à pallier ces inconvénients et a pour principal objectif de fournir un dispositif de convoyage de conception très simple dont les coûts de revient et de maintenance sont réduits de façon notable par rapport à ceux des dispositifs de convoyage actuels.

Un autre objectif de l'invention est de fournir un dispositif de convoyage présentant un encombrement transversal réduit par rapport aux dispositifs de convoyage actuels.

Un autre objectif de l'invention est de fournir un dispositif de convoyage apte à permettre le transport et le tri de fruits de tailles et/ou de formes très différentes.

A cet effet, l'invention vise un dispositif de convoyage tel que décrit dans le préambule ci-dessus, se caractérisant en ce que :
- chaque main de convoyage est prolongée transversalement par un corps évidé délimité par une bordure périphérique, à l'intérieur duquel s'étend un manchon longitudinal logeant un axe d'articulation longitudinal solidaire du support, ledit manchon étant relié à la bordure périphérique par un élément flexible transversal apte à se déformer lors d'un effort de soulèvement de la main de convoyage disposée dans sa position de transport des produits,
- les organes de maintien des mains de convoyage dans leur position de transport des produits comprennent une encoche ménagée dans le corps de ladite main de convoyage, et une goupille longitudinale solidaire du support et agencée pour être logée dans l'encoche dans la position de transport des mains de convoyage, ladite encoche étant ménagée de façon à libérer la goupille lors d'une déformation de l'organe flexible résultant d'un effort de soulèvement desdites mains de convoyage.

Selon l'invention, et en premier lieu, l'articulation de chaque main de convoyage sur un support et le déclenchement de cette main de convoyage en vue de son basculement, sont obtenus au moyen d'un nombre réduit de façon optimale de pièces, dont une seule en mouvement, à savoir la main de convoyage elle-même.

De ce fait, le prix de revient des organes de convoyage du dispositif de convoyage est optimisé, et la maintenance de ces derniers est très réduite du fait de l'absence de pièces susceptibles d'usure résultant d'efforts par frottements.

De plus, il s'avère que la conception de l'articulation de la main de convoyage dont l'axe d'articulation est décalé transversalement par rapport à la surface supportant le produit, conduit à obtenir une ouverture positive de ladite main de convoyage et une chute instantanée et quasi verticale du produit une fois le basculement déclenché.

Dans la pratique, cette conception conduit à obtenir un gain d'encombrement transversal non négligeable du dispositif de convoyage par rapport à celui des dispositifs de convoyage actuels. En effet, pour ces derniers, et notamment celui décrit dans le brevet FR-A-2.716.874, le fruit tombe selon une trajectoire oblique l'éloignant du support d'une distance variable fonction de la vitesse de défilement du dispositif de convoyage. Par contre, selon l'invention, les produits tombent verticalement et donc l'encombrement transversal du dispositif de convoyage peut être réduit.

Selon une autre caractéristique de l'invention, l'organe flexible des mains de convoyage consiste en une lame flexible agencée pour s'étendre horizontalement dans la position de transport desdites mains de convoyage.

De plus, l'encoche est avantageusement ménagée dans la bordure périphérique du corps, côté intérieur dudit corps, au niveau d'une portion de ladite bordure périphérique située dans la partie supérieure du corps, dans la position de transport des mains de convoyage.

Selon une autre caractéristique de l'invention, la bordure périphérique du corps des mains de convoyage comporte une rampe plane inclinée d'accès à l'encoche. Une telle rampe facilite en effet le verrouillage de la main de convoyage, et permet également de limiter la longueur de la surface sur laquelle frotte la goupille après déclenchement.

Selon une autre caractéristique de l'invention, les moyens de déclenchement comprennent :
- pour chaque main de convoyage, un talon inférieur d'éjection s'étendant en saillie sous le corps de ladite main de convoyage,
- au niveau de chaque zone de déchargement, une came associée à des moyens de pivotement aptes à la faire basculer autour d'un axe longitudinal entre une position active où elle se trouve sur le trajet des talons d'éjection des mains de convoyage et provoque un déplacement vers le haut desdits talons d'injection et un basculement initial desdites mains de convoyage, et une position passive où ladite came permet le passage du talon d'éjection.

Par ailleurs, les mains de convoyage peuvent être du type comportant une barre centrale s'étendant transversalement par rapport à la chaîne sans fin, et une pluralité de doigts disposés orthogonalement et répartis de part et d'autre de ladite barre centrale. Dans ce cas, le corps de ces mains de convoyage s'étend avantageusement dans le prolongement de la barre centrale et présente sensiblement une même largeur que cette dernière.

Il est à noter que dans ce cas, la largeur de la barre centrale de ces mains de convoyage peut être notablement réduite par rapport à celle des mains de convoyage du dispositif de convoyage décrit dans le brevet français FR-A-2.716.874. De ce fait, lorsque le dispositif de convoyage selon l'invention équipe une unité de tri telle que décrite dans ce brevet, l'entr'axe des plaques supports des chariots du convoyeur de pesage peut être réduit, autorisant ainsi la prise en charge et la pesée de fruits de très petites tailles ou de fruits de forme autre que sphérique, tel que des poires.

Selon une autre caractéristique de l'invention, chaque support comporte, pour chaque main de convoyage, une glissière transversale apte à loger le corps de ladite main de convoyage tout en autorisant les basculements de cette dernière. De telles glissières permettent de guider les mains de convoyage lors de leur basculement, conduisant à la suppression des risques de rupture et d'usure des axes d'articulation.

Par ailleurs, selon une autre caractéristique de l'invention :
- la chaîne sans fin est guidée sur un rail de guidage doté d'une face de roulement de ladite chaîne sans fin et porté par un profilé longitudinal,
- chaque support comprend une chape adaptée pour loger la chaîne sans fin et dotée de moyens d'encliquetage dudit support sur ladite chaîne sans fin.

La structure porteuse d'un tel dispositif de convoyage est réduite de façon optimale puisque constituée principalement d'un profilé support du rail de guidage sur lequel se déplace la chaîne sans fin. De plus, une telle structure porteuse libère totalement l'espace situé au-dessus des mains de convoyage, de sorte que des fruits de taille importante peuvent être transportés.

De plus, afin de garantir la stabilité transversale des supports, leurs moyens d'encliquetage sur la chaîne sans fin comprennent avantageusement une deuxième chape ménagée à l'intérieur de la première chape et de dimensions adaptées pour coiffer le rail de guidage, et pour délimiter à l'intérieur de ladite première chape, deux espaces longitudinaux latéraux aptes à loger les maillons de la chaîne sans fin.

Cette deuxième chape comporte, en outre, préférentiellement, des crans externes de blocage de la chaîne sans fin dans les espaces longitudinaux délimités par ladite deuxième chape.

Selon une autre caractéristique de l'invention, chaque support porte deux mains de convoyage s'étendant transversalement de part et d'autre dudit support. Un tel dispositif de convoyage comporte donc deux lignes de convoyage portées par une ligne unique de supports guidés sur un rail de guidage unique et formant une séparation centrale entre lesdites lignes de convoyage.

De plus, chaque support comporte avantageusement de part et d'autre de la chape, des parois transversales portant les axes d'articulation des mains de convoyage. Ces parois transversales sont de plus préférentiellement au nombre de deux, de chaque côté de la chape, et adaptées pour délimiter les glissières logeant les corps des mains de convoyage.

Selon une autre caractéristique de l'invention, chaque support comporte une paroi supérieure en forme générale de V inversé formé de deux pans inclinés transversalement.

Selon une autre caractéristique de l'invention, la paroi supérieure de chaque support comporte une gorge longitudinale axiale, ledit dispositif de convoyage comprenant un rail de guidage longitudinal s'étendant sous le brin inférieur de la chaîne sans fin et adapté pour se loger dans ladite gorge des supports, de façon à guider les supports sans fatigue de la chaîne sans fin.

Par ailleurs, les moyens de pivotement des cames comprennent avantageusement un électro-aimant fixé sur le profilé longitudinal au moyen d'une bague dotée de moyens de fixation amovible sur ledit profilé, supprimant ainsi toute nécessité de réglage de la position relative des mains de convoyage et dudit électro-aimant du fait que ces deux éléments sont portés par un même profilé.

Selon une autre caractéristique de l'invention, le dispositif de convoyage comprend, pour chaque ligne de convoyage, un disque de ré-enclenchement porté par l'arbre transversal de la roue dentée aval et disposé de façon à se trouver sur le trajet des mains de convoyage.

De plus, il comprend avantageusement, pour chaque ligne de convoyage, un disque doté d'une bande de mousse périphérique, porté par l'arbre transversal de la roue dentée aval et disposé de façon à se trouver sur le trajet des talons d'éjection des mains de convoyage, et à étouffer le bruit provoqué par le verrouillage des mains de convoyage.

D'autres caractéristiques, buts et avantages de l'invention ressortiront de la description détaillée qui suit en référence aux dessins annexés qui en représentent, à titre d'exemple non limitatif, un mode de réalisation préférentiel. Sur ces dessins :
- la figure 1 est une vue longitudinale partielle, avec des parties arrachées, d'un dispositif de convoyage conforme à l'invention,

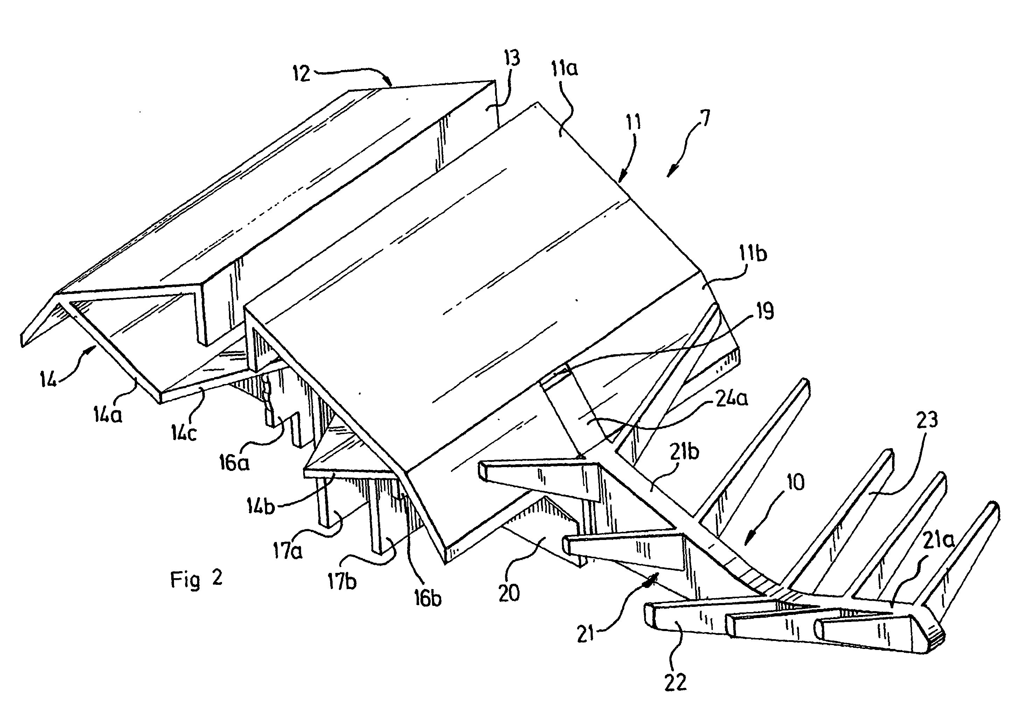

- la figure 2 est une vue en perspective d'un support pour mains de convoyage conforme à l'invention, sur laquelle une seule des deux mains de convoyage est représentée,
- la figure 3 est une coupe transversale par un plan vertical A du dispositif de convoyage conforme à l'invention sur laquelle sont représentés, d'une part, une main de convoyage en position basculée et une main de convoyage en position verrouillée et, d'autre part, les moyens de déclenchement de ces mains de convoyage,

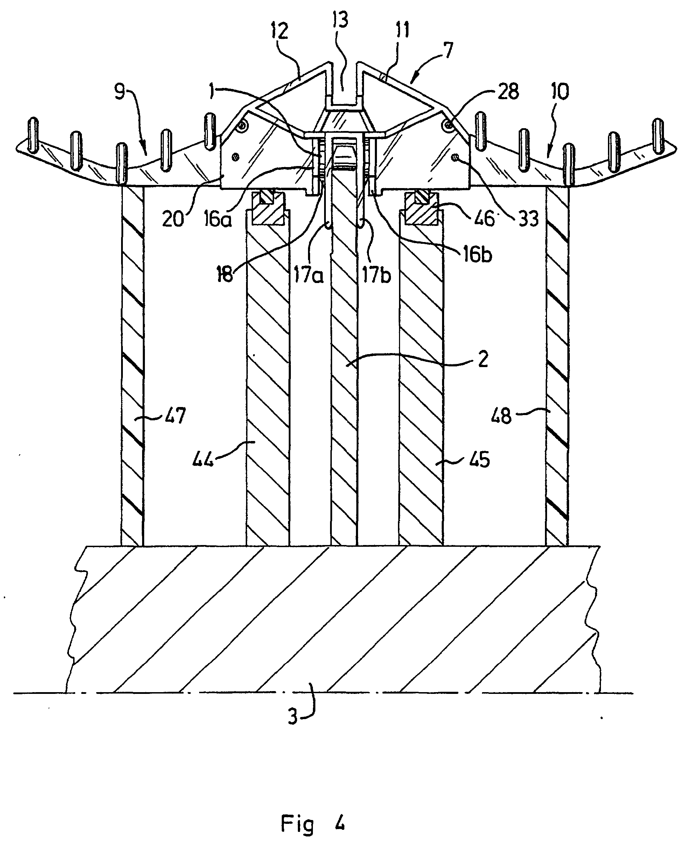

- et la figure 4 est une coupe transversale par un plan B de ce dispositif de convoyage.

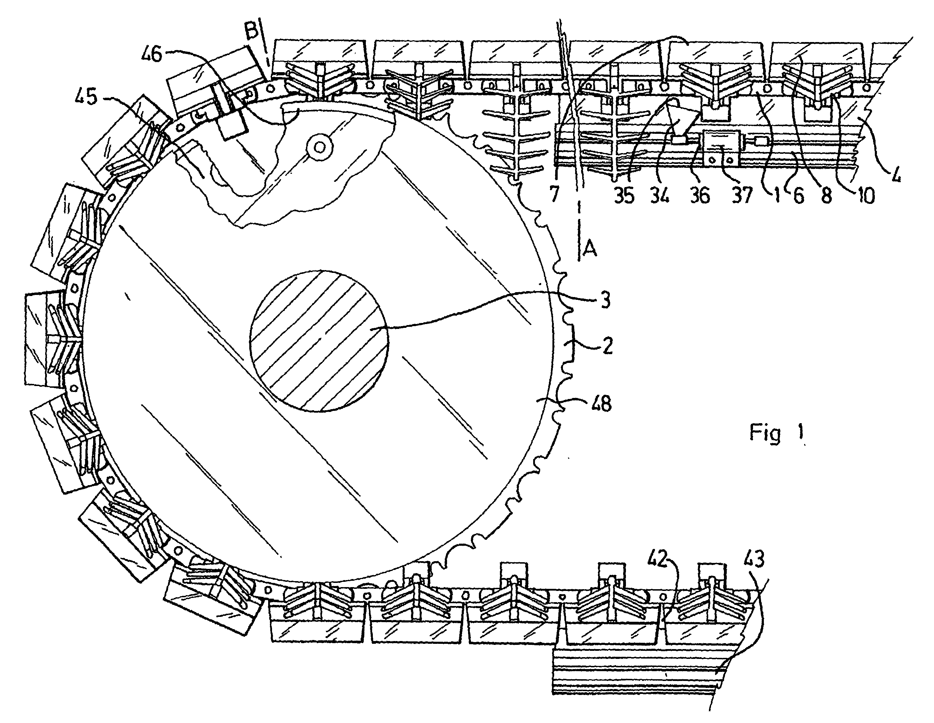

Le dispositif de convoyage représenté à la figure 1 est adapté pour assurer le transport de fruits ou légumes et permettre, en fonction de critères de sélection prédéterminés, une évacuation sélective desdits fruits ou légumes au niveau de zones de déchargement disposées les unes à la suite des autres le long du trajet dudit dispositif de convoyage.

Un tel dispositif de convoyage est notamment conçu pour être intégré dans une unité de tri telle que décrite dans le brevet français FR-A-2.716.874, et constituer le deuxième convoyeur de cette unité de tri assurant le transport des fruits ou légumes entre la zone de chargement et d'analyse optique de ces derniers et les zones de déchargement, et le long du trajet duquel est interposé un convoyeur intermédiaire adapté pour prendre en charge momentanément les fruits ou légumes en vue d'assurer leur pesée.

Ce dispositif de convoyage comprend, en premier lieu, une chaîne sans fin 1 engrenée autour de deux roues dentées, dont une seule, la roue dentée aval 2, est représentée à la figure 1, portées chacune par un arbre transversal tel que 3.

Cette chaîne sans fin 1 est portée, au niveau du brin supérieur du dispositif de convoyage, par un profilé longitudinal horizontal 4 de section rectangulaire, réalisé en polyéthylène, formant un rail de guidage de ladite chaîne sans fin sur lequel se déplacent les rouleaux de cette dernière.

Ce rail de guidage 4 est lui-même porté par un profilé en aluminium 6 doté à cet effet d'une gorge supérieure horizontale 5 dans laquelle la partie inférieure dudit rail de guidage est insérée en force.

Le dispositif de convoyage comprend, en deuxième lieu, une pluralité de supports tels que 7, 8 adaptés pour venir s'encliqueter sur la chaîne sans fin 1, portant chacun deux mains de convoyage 9, 10 s'étendant transversalement de part et d'autre desdits supports, et articulées sur ces derniers de façon à pouvoir pivoter entre une position de transport des fruits et légumes et une position basculée d'évacuation desdits fruits ou légumes au niveau d'une zone de déchargement.

Chacun de ces supports 7, 8 comporte en premier lieu une paroi supérieure en forme de dièdre tronqué constitué de deux pans 11, 12 inclinés transversalement, s'étendant de part et d'autre d'une gorge longitudinale centrale 13 axée sur l'axe longitudinal du dispositif de convoyage.

De plus, chaque pan 11, 12 présente une double déclivité et comporte une première bande de largeur 11a, médiane, jouxtant la rainure 13, d'inclinaison inférieure à celle d'une seconde bande de largeur 11b latérale.

Chaque support 7, 8 comporte, en outre, une paroi inférieure 14 agencée pour délimiter, avec les bandes médianes 11a des pans 11, 12 de la paroi supérieure, un volume dont la section transversale présente la forme générale d'un losange.

Cette paroi inférieure 14 comporte, à cet effet, deux pans latéraux inclinés symétriques 14a, 14b reliés par une bande centrale horizontale 14c.

De plus, des entretoises longitudinales telles que 15 sont ménagées entre les parois supérieure 11, 12 et inférieure 14, et disposées de façon à s'étendre entre le fond de la rainure 13 et la bande centrale 14c.

Chaque support 7, 8 comporte, par ailleurs, deux parois longitudinales verticales 16a, 16b s'étendant sous la bande centrale 14c de la paroi inférieure 14, et délimitant avec cette dernière une chape de largeur équivalente à celle de la chaîne sans fin 1, apte à loger cette dernière, et de profondeur supérieure à l'épaisseur de ladite chaîne sans fin.

De plus, chaque support 7, 8 comporte, à l'intérieur de la chape précitée, deux autres parois longitudinales 17a, 17b de hauteurs supérieures à celles des parois verticales 16a, 16b, délimitant à l'intérieur de la première chape :
- d'une part, avec la bande centrale 14c de la paroi inférieure 14, une deuxième chape de largeur et profondeur adaptées pour coiffer la quasi-totalité de la portion de hauteur du rail de guidage 4 émergeant de la gorge 5 du profilé en aluminium 6,
- d'autre part, avec les parois verticales 16a, 16b, deux espaces longitudinaux dans lesquels viennent se loger les maillons de la chaîne sans fin 1.

De plus, chaque paroi verticale 17a, 17b présente un cran 18 de blocage des maillons de la chaîne sans fin 1 à l'intérieur des espaces longitudinaux délimités par les parois 16a, 16b et lesdites parois 17a, 17b.

Chaque support 7, 8 comporte également deux paires de parois transversales telles que 20 ménagées respectivement de part et d'autre des parois longitudinales 16a, 16b et délimitées d'une part par lesdites parois longitudinales 16a, 16b et d'autre part par les parois inférieures 14 et supérieure 11, 12, de façon à définir deux glissières transversales telles que 19, à l'aplomb desquelles, en outre, les bandes latérales 11b des pans 11, 12 de la paroi supérieure présentent une échancrure.

Chacune des mains de convoyage 9, 10 réalisée en une matière avec mémoire de forme, tel que du polyacétal, comporte, quant à elle, une barre centrale 21 présentant longitudinalement une forme concave, de part et d'autre de laquelle s'étendent orthogonalement une pluralité de doigts tels que 22, 23 disposés en regard les uns des autres et incurvés vers le haut de façon à conférer à ladite main de convoyage la forme d'une cuvette allongée transversalement par rapport à la chaîne sans fin 1, apte à loger un fruit ou légume.

La barre centrale 21, de largeur sensiblement constante sur toute sa longueur présente, en outre, vue latéralement en élévation, et de part et d'autre de son point d'inflexion, un premier tronçon d'extrémité 21a d'épaisseur constante, et un deuxième tronçon 21b d'épaisseur croissante à partir dudit point d'inflexion conférant audit deuxième tronçon, vu en élévation, la forme générale d'un triangle rectangle dont la base s'étend sensiblement horizontalement dans la position de transport des mains de convoyage 9, 10, et dont l'hypoténuse forme la face supérieure de réception des fruits ou légumes.

Chaque main de convoyage 9, 10 comprend, en outre, dans le prolongement du deuxième tronçon 21b de la barre centrale 21, un "corps" 24 d'articulation de ladite main de convoyage sur un support 7, 8, adapté pour venir s^{'}insérer dans une des glissières transversales 19 dudit support.

Ce corps 24, de largeur sensiblement équivalente à celle de la barre centrale 21, adaptée tel que précité, pour s'insérer dans une des glissières 19 du support 7, 8, est, en outre, évidé et délimité par une bordure périphérique 25 présentant :
- une portion de tronçon frontal 25a s'étendant dans la continuité de la face supérieure de la barre transversale 21, et présentant, dans la position verrouillée des mains de convoyage 9, 10, une inclinaison conjuguée de celle de la bande latérale 1b de la paroi supérieure du support 7, 8, adaptée pour régner avec la face supérieure de ladite bande latérale.
- une portion de tronçon inférieur 25b s'étendant dans la continuité de la base du deuxième tronçon 21b de la barre centrale 21,
- et une portion de tronçon arrière courbe 25c.

Ce corps comporte, en outre, un talon arrière 26 en saillie sous le tronçon inférieur 25b de la bordure périphérique 25.

Il comporte, également, une encoche interne de verrouillage 27 ménagée sensiblement au niveau de l'intersection des tronçons frontal 25a et arrière 25c de la bordure périphérique 25, adaptée pour loger un axe longitudinal 28 s'étendant au travers d'orifices ménagés dans les parois transversales 20 délimitant chaque glissière 19 des supports 7, 8, de façon à maintenir les mains de convoyage 9, 10 dans leur position de transport des fruits ou légumes.

De plus, le tronçon arrière 25c de la bordure périphérique 25 présente intérieurement une rampe plane inclinée 29 d'accès à l'encoche 27, s'étendant dans la continuité de la portion courbe dudit tronçon arrière.

Ce corps 24 comporte enfin un manchon longitudinal interne 31 ménagé au niveau de l'extrémité d'une lame flexible déformable 32 solidaire, au niveau de son autre extrémité, du tronçon arrière 25c de la bordure périphérique 25, et ménagée de façon à s'étendre horizontalement dans la position de transport des mains de convoyage.

Ce manchon interne 31 constitue un palier logeant l'axe d'articulation longitudinal 33 des mains de convoyage 9, 10 qui s'étend au travers d'orifices ménagés dans les parois transversales 20 délimitant chaque glissière 19 des supports 7, 8.

Le dispositif de convoyage comprend, par ailleurs, des moyens de déclenchement adaptés pour provoquer de façon sélective le basculement des mains de convoyage 9, 10 au niveau des zones de déchargement.

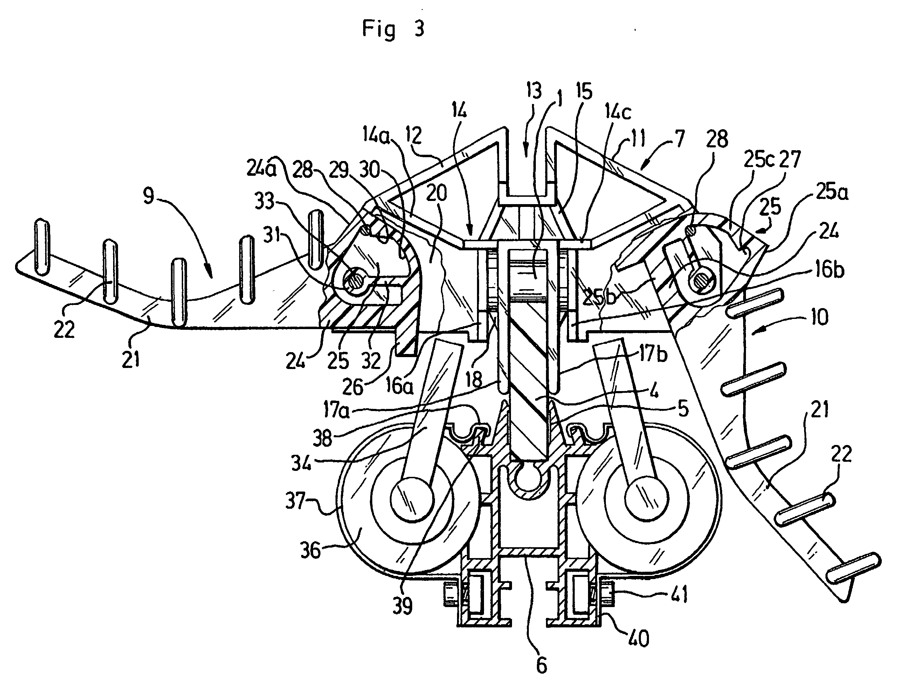

Ces moyens de déclenchement comprennent une came 34 dotée d'une face supérieure plane inclinée 35, ascendante en considérant le sens de défilement du dispositif de convoyage, ladite came étant portée par un électro-aimant 36 apte à la faire basculer autour d'un axe longitudinal entre deux positions :
- une position active où cette came 34 s'étend sensiblement verticalement et se trouve sur la trajectoire des talons 26 des mains de convoyage 9, 10, et dans laquelle, grâce à son profil, elle provoque un déplacement vers le haut desdits talons et un basculement desdites mains de convoyage autorisé grâce à la faculté de déformation de la lame flexible 32,
- et une position passive représentée à la figure 3 où cette came 34 est inclinée en direction du rail de guidage 4 et permet le passage des talons 26 des mains de convoyage 9, 10.

Chaque électro-aimant 36 est, en outre, monté sur une des faces latérales du profilé 6 au moyen de bagues sensiblement semi-cylindriques 37 présentant, d'une part, au niveau de leur bord longitudinal supérieur un profil 38 de crochetage sur des nervures longitudinales 39 dont est pourvu ledit profilé et, d'autre part, un rebord inférieur plan 40 d'appui contre le profilé 6 permettant de solidariser ladite bague sur ce dernier au moyen de vis 41.

Le dispositif de convoyage comporte, par ailleurs, au niveau du brin inférieur de la chaîne sans fin 1, un rail de guidage 42 et un profilé 43 similaires au rail de guidage 4 et au profilé 6, ledit rail de guidage présentant une largeur adaptée pour venir se loger dans la gorge centrale 13 des supports 7, 8, de façon à guider lesdits supports sans fatigue de la chaîne sans fin 1.

Ce dispositif de convoyage comporte également des moyens de ré-enclenchement des mains de convoyage 9, 10 adaptés pour les amener à pivoter de leur position basculée vers leur position verrouillée. Ces moyens de ré-enclenchement consistent en deux disques en polyéthylène 47, 48 portés par l'arbre transversal 3 de la roue dentée aval 2, de part et d'autre de cette dernière, de façon à se trouver sur le trajet des mains de convoyage 9, 10 pour amener ces dernières à pivoter vers leur position de transport.

Le dispositif de convoyage comprend, enfin, deux autres disques en polyéthylène 44, 45 portés par l'arbre transversal 3 de la roue dentée aval 2, et disposés entre ladite roue dentée et les disques de ré-enclenchement 47, 48 de façon à se trouver sur le trajet des talons 26 des mains de convoyage 9, 10.

Ces deux disques 44, 45 sont cerclés d'une bande de mousse périphérique 46 faisant office d'amortisseur sonore étouffant le bruit provoqué par le verrouillage des mains de convoyage.

## Revendications

1. Dispositif de convoyage de produits, notamment de fruits, adapté pour assurer le transport desdits produits et leur évacuation sélective au niveau de zones de déchargement, comprenant :
- une pluralité de mains de convoyage (9, 10) articulées sur des supports (7, 8) portés par une chaîne sans fin longitudinale (1), et dotées d'organes (27, 28) de maintien desdites mains de convoyage dans une position de transport des produits,
- des moyens de déclenchement (34-36) adaptés pour engendrer de façon sélective le basculement des mains de convoyage (9, 10) en vue de l'évacuation des produits portés par celles-ci dans une des zones de déchargement,
ledit dispositif de convoyage étant **caractérisé en ce que** :
- chaque main de convoyage (9, 10) est prolongée transversalement par un corps évidé (24) délimité par une bordure périphérique (25), à l'intérieur duquel s'étend un manchon longitudinal (31) logeant un axe d'articulation longitudinal (33) solidaire du support (7, 8), ledit manchon étant relié à la bordure périphérique (25) par un élément flexible transversal (32) apte à se déformer lors d'un effort de soulèvement de la main de convoyage (9, 10) disposée dans sa position de transport des produits,
- les organes de maintien des mains de convoyage (9, 10) dans leur position de transport des produits comprennent une encoche (27) ménagée dans le corps (24) de ladite main de convoyage, et une goupille longitudinale (28) solidaire du support (7, 8) et agencée pour se loger dans l'encoche (27) dans la position de transport des mains de convoyage (9, 10), ladite encoche étant ménagée de façon à libérer la goupille (28) lors d'une déformation de l'organe flexible (32) résultant d'un effort de soulèvement desdites mains de convoyage.

2. Dispositif de convoyage selon la revendication 1, **caractérisé en ce que** l'organe flexible des mains de convoyage (9, 10) consiste en une lame flexible (32) agencée pour s'étendre horizontalement dans la position de transport desdites mains de convoyage.

3. Dispositif de convoyage selon l'une des revendications 1 ou 2, **caractérisé en ce que** l'encoche (27) est ménagée dans la bordure périphérique (25) du corps (24), côté intérieur dudit corps, au niveau d'une portion de ladite bordure périphérique située dans la partie supérieure du corps (24), dans la position de transport des mains de convoyage (9, 10).

4. Dispositif de convoyage selon la revendication 3, **caractérisé en ce que** la bordure périphérique (25) du corps (24) des mains de convoyage (9, 10) comporte une rampe plane inclinée (30) d'accès à l'encoche (27).

5. Dispositif de convoyage selon l'une des revendications précédentes, **caractérisé en ce que** les moyens de déclenchement comprennent :
- pour chaque main de convoyage (9, 10), un talon inférieur d'éjection (26) s'étendant en saillie sous le corps (24) de ladite main de convoyage,
- au niveau de chaque zone de déchargement, une came (34) associée à des moyens de pivotement (36) aptes à la faire basculer autour d'un axe longitudinal entre une position active où elle se trouve sur le trajet des talons d'éjection (26) des mains de convoyage (9, 10) et provoque un déplacement vers le haut desdits talons d'injection et un basculement initial desdites mains de convoyage, et une position passive où ladite came permet le passage du talon d'éjection (26).

6. Dispositif de convoyage selon l'une des revendications précédentes, dans lequel les mains de convoyage (9, 10) comportent une barre centrale (21) s'étendant transversalement par rapport à la chaîne sans fin (1), et une pluralité de doigts (22, 23) disposés orthogonalement et répartis de part et d'autre de ladite barre centrale, ledit dispositif de convoyage étant **caractérisé en ce que** le corps (24) desdites mains de convoyage s'étend dans le prolongement de la barre centrale (21) et présente sensiblement une même largeur que cette dernière.

7. Dispositif de convoyage selon la revendication 6, **caractérisé en ce que** chaque support (7, 8) comporte, pour chaque main de convoyage (9, 10), une glissière transversale (19) apte à loger le corps (24) de ladite main de convoyage tout en autorisant les basculements de cette dernière.

8. Dispositif de convoyage selon l'une des revendications précédentes, **caractérisé en ce que** :
- la chaîne sans fin (1) est guidée sur un rail de guidage (4) doté d'une face de roulement de ladite chaîne sans fin et porté par un profilé longitudinal (16),
- chaque support (7, 8) comprend une chape (16a, 16b) adaptée pour loger la chaîne sans fin (1) et dotée de moyens d'encliquetage (17a, 17b, 18)dudit support sur ladite chaîne sans fin.

9. Dispositif de convoyage selon la revendication 8, **caractérisé en ce que** les moyens d'encliquetage des supports (7, 8) comprennent une deuxième chape (17a, 17b) ménagée à l'intérieur de la première chape (16a, 16b) et de dimensions adaptées pour coiffer le rail de guidage (4), et pour délimiter à l'intérieur de ladite première chape, deux espaces longitudinaux latéraux aptes à loger les maillons de la chaîne sans fin (1).

10. Dispositif de convoyage selon la revendication 9, **caractérisé en ce que** la deuxième chape (17a, 17b) comporte des crans externes (18) de blocage de la chaîne sans fin (1) dans les espaces longitudinaux délimités par ladite deuxième chape.

11. Dispositif de convoyage selon l'une des revendications 8 à 10, **caractérisé en ce que** chaque support (7, 8) porte deux mains de convoyage (9, 10) s'étendant transversalement de part et d'autre dudit support.

12. Dispositif de convoyage selon la revendication 11, **caractérisé en ce que** chaque support (7, 8) comporte, de part et d'autre de la chape (16a, 16b), des parois transversales (20) portant les axes d'articulation (33) des mains de convoyage (9, 10).

13. Dispositif de convoyage selon les revendications 7 et 12 prises ensemble, **caractérisé en ce que** chaque support (7, 8) comprend, de chaque côté de la chape (16a, 16b), deux parois transversales (20) délimitant une glissière (19) pour la main de convoyage (9, 10).

14. Dispositif de convoyage selon l'une des revendications 11 à 12, **caractérisé en ce que** chaque support (7, 8) comporte une paroi supérieure (11, 12) en forme générale de V inversé formé de deux pans inclinés transversalement.

15. Dispositif de convoyage selon la revendication 14, **caractérisé en ce que** la paroi supérieure (11, 12) de chaque support (7, 8) comporte une gorge longitudinale axiale (13), ledit dispositif de convoyage comprenant un rail de guidage longitudinal (42) s'étendant sous le brin inférieur de la chaîne sans fin (1) et adapté pour se loger dans ladite gorge des supports.

16. Dispositif de convoyage selon les revendications 6 et 8 prises ensemble, **caractérisé en ce que** les moyens de pivotement des cames (34) comprennent un électro-aimant (36) fixé sur le profilé longitudinal (6) au moyen d'une bague (37)dotée de moyens de fixation amovible (14) sur ledit profilé.

17. Dispositif de convoyage selon l'une des revendications précédentes, comprenant deux roues dentées, amont et aval (2), d'engrenage de la chaîne sans fin (1), **caractérisé en ce qu'**il comprend, pour chaque ligne de convoyage, un disque de ré-enclenchement (47, 48) porté par l'arbre transversal (3) de la roue dentée aval (2) et disposé de façon à se trouver sur le trajet des mains de convoyage (9, 10).

18. Dispositif de convoyage selon les revendications 5 et 17 prises ensemble, **caractérisé en ce qu'**il comprend, pour chaque ligne de convoyage, un disque (44, 45) doté d'une bande de mousse périphérique (46), porté par l'arbre transversal (3) de la roue dentée aval (2) et disposé de façon à se trouver sur le trajet des talons d'éjection (26) des mains de convoyage (9, 10).

## Patentansprüche

1. Vorrichtung zum Fördern von Produkten, insbesondere von Früchten, die so gestaltet ist, dass sie die genannten Produkte transportiert und sie an Entladezonen selektiv entlädt, wobei die Vorrichtung Folgendes umfasst:
- eine Mehrzahl von Förderarmen (9, 10), die an Auflagen (7, 8) angelenkt sind, die von einer längsverlaufenden Endloskette (1) getragen werden, und die mit Mechanismen (27, 28) versehen sind, die die genannten Förderarme in einer Produkttransportposition halten;
- Auslösemittel (34-36), die so gestaltet sind, dass sie ein selektives Kippen der Förderarme (9, 10) zum Entladen der von diesen getragenen Produkte in einen der Entladebereiche bewirken;
wobei die genannte Fördervorrichtung **dadurch gekennzeichnet ist, dass**
- jeder Förderarm (9, 10) transversal von einem Hohlkörper (24) verlängert wird, der von einem Umfangsrand (25) begrenzt wird, innerhalb dessen eine Längshülse (31) verläuft, die eine einstückig mit der Auflage (7, 8) ausgebildete Längsgelenkachse (33) aufnimmt, wobei die genannte Hülse durch ein quer verlaufendes flexibles Element (32), das sich aufgrund einer Kraft zum Heben des Förderarms (9, 10) verformen kann und in seiner Produkttransportposition angeordnet ist, mit dem Umfangsrand (25) verbunden ist; und
- die Mechanismen zum Halten der Förderarme (9, 10) in ihrer Produkttransportposition eine Aussparung (27) aufweisen, die in dem Körper (24) des genannten Förderarms vorgesehen ist, und einen Längsbolzen (28), der in die Auflage (7, 8) integriert und so angeordnet ist, dass er in der Aussparung (27) in der Transportposition der Förderarme (9, 10) aufgenommen werden kann, wobei die genannte Aussparung so angeordnet ist, dass sie den Bolzen (28) bei einer Verformung des flexiblen Mechanismus (32) freigibt, die durch eine Hebekraft der genannten Förderarme entsteht.

2. Fördervorrichtung nach Anspruch 1, **dadurch gekennzeichnet, dass** der flexible Mechanismus der Förderarme (9, 10) aus einer flexiblen Lamelle (32) besteht, die so gestaltet ist, dass sie horizontal in der Transportposition der genannten Förderarme verläuft.

3. Fördervorrichtung nach Anspruch 1 oder 2, **dadurch gekennzeichnet, dass** die Aussparung (27) im Umfangsrand (25) des Körpers (24) auf der Innenseite des genannten Körpers in einem Abschnitt des genannten Umfangsrandes im oberen Teil des Körpers (24) in der Transportposition der Förderarme (9, 10) vorgesehen ist.

4. Fördervorrichtung nach Anspruch 3, **dadurch gekennzeichnet, dass** der Umfangsrand (25) des Körpers (24) der Förderarme (9, 10) eine geneigte ebene Zugangsrampe (30) zu der Aussparung (27) aufweist.

5. Fördervorrichtung nach einem der vorherigen Ansprüche, **dadurch gekennzeichnet, dass** die Auslösemittel Folgendes umfassen:
- für jeden Förderarm (9, 10) einen unteren Auswurfansatz (26), der unter dem Körper (24) des genannten Förderarms vorsteht; und
- in jedem Entladebereich eine Nocke (34), die mit Schwenkmitteln (36) verbunden ist, die ein Kippen der Nocke um eine Längsachse zwischen einer aktiven Position, in der sie sich im Weg der Auswurfansätze (26) der Förderarme (9, 10) befindet und eine Aufwärtsverschiebung der genannten Auswurfansätze und ein anfängliches Kippen der genannten Förderarme erzeugt, und einer passiven Position bewirken können, in der die genannte Nocke die Passage des Auswurfansatzes (26) zulässt.

6. Fördervorrichtung nach einem der vorherigen Ansprüche, bei der die Förderarme (9, 10) einen mittleren, transversal zur Endloskette (1) verlaufenden Stab (21) und eine Mehrzahl von Zinken (22, 23) umfassen, die orthogonal angeordnet und auf beiden Seiten des genannten mittleren Stabs verteilt sind, wobei die genannte Fördervorrichtung **dadurch gekennzeichnet ist, dass** der Körper (24) der genannten Förderarme in der Verlängerung des mittleren Stabs (21) verläuft und im Wesentlichen dieselbe Breite hat wie dieser.

7. Fördervorrichtung nach Anspruch 6, **dadurch gekennzeichnet, dass** jede Auflage (7, 8) für jeden Förderarm (9, 10) eine Querschiene (19) umfasst, die den Körper (24) des genannten Förderarms aufnehmen und gleichzeitig ein Kippen desselben zulassen kann.

8. Fördervorrichtung nach einem der vorherigen Ansprüche, **dadurch gekennzeichnet, dass**
- die Endloskette (1) auf einer Führungsschiene (4) geführt wird, die mit einer Rollfläche für die genannte Endloskette versehen ist und von einem profilierten Längsabschnitt (16) getragen wird; und
- jede Auflage (7, 8) eine Abdeckung (16a, 16b) umfasst, die so gestaltet ist, dass sie die Endloskette (1) aufnimmt, und die mit Mitteln (17a, 17b, 18) zum Verriegeln der genannten Auflage auf der Endloskette versehen ist.

9. Fördervorrichtung nach Anspruch 8, **dadurch gekennzeichnet, dass** die Mittel zum Verriegeln der Auflagen (7, 8) eine zweite Abdeckung (17a, 17b) umfassen, die einwärts von der ersten Abdeckung (16a, 16b) angeordnet und so dimensioniert ist, dass sie die Führungsschiene (4) verdeckt und innerhalb der genannten ersten Abdeckung zwei laterale Längsräume zum Aufnehmen der Glieder der Endloskette (1) begrenzt.

10. Fördervorrichtung nach Anspruch 9, **dadurch gekennzeichnet, dass** die zweite Abdeckung (17a, 17b) äußere Rasten (18) zum Verriegeln der Endloskette (1) in den Längsräumen umfasst, die von der genannten zweiten Abdeckung begrenzt werden.

11. Fördervorrichtung nach einem der Ansprüche 8 bis 10, **dadurch gekennzeichnet, dass** jede Auflage (7, 8) zwei Förderarme (9, 10) trägt, die transversal auf beiden Seiten der genannten Auflage verlaufen.

12. Fördervorrichtung nach Anspruch 11, **dadurch gekennzeichnet, dass** jede Auflage (7, 8) auf beiden Seiten der Abdeckung (16a, 16b) Querwände (20) aufweist, die die Gelenkachsen (33) der Förderarme (9, 10) tragen.

13. Fördervorrichtung nach Anspruch 7 und 12 gemeinsam, **dadurch gekennzeichnet, dass** jede Auflage (7, 8) auf jeder Seite der Abdeckung (16a, 16b) zwei Querwände (20) umfasst, die eine Schiene (19) für den Förderarm (9, 10) begrenzen.

14. Fördervorrichtung nach Anspruch 11 oder 12, **dadurch gekennzeichnet, dass** jede Auflage (7, 8) eine obere Wand (11, 12) in der allgemeinen Form eines umgekehrten V umfasst, die von zwei transversal geneigten Flächen gebildet wird.

15. Fördervorrichtung nach Anspruch 14, **dadurch gekennzeichnet, dass** die obere Wand (11, 12) jeder Auflage (7, 8) eine axiale Längsrille (13) umfasst, wobei die genannte Fördervorrichtung eine Längsführungsschiene (42) umfasst, die unter dem unteren Rand der Endloskette (1) verläuft und so gestaltet ist, dass sie in der genannten Rille der Auflagen aufgenommen wird.

16. Fördervorrichtung nach Anspruch 6 und 8 gemeinsam, **dadurch gekennzeichnet, dass** die Mittel zum Schwenken der Nocken (34) einen Elektromagnet (36) umfassen, der mit einem Ring (37), der mit Mitteln (14) zum lösbaren Befestigen an dem genannten Profilabschnitt versehen ist, am Längsprofilabschnitt (6) befestigt ist.

17. Fördervorrichtung nach einem der vorherigen Ansprüche, die zwei Zahnräder (2), oberhalb und unterhalb, für den Eingriff in die Endloskette (1) umfasst, **dadurch gekennzeichnet, dass** sie für jede Förderlinie eine Neueingriffsscheibe (47, 48) umfasst, die von der Querwelle (3) des nachgeschalteten Zahnrades (2) gelagert wird, und so angeordnet ist, dass sie auf dem Pfad der Förderarme (9, 10) verläuft.

18. Fördervorrichtung nach Anspruch 5 und 17 gemeinsam, **dadurch gekennzeichnet, dass** sie für jede Förderlinie eine Scheibe (44, 45) umfasst, die mit einem peripheren Schaumstoffstreifen (46) verstehen ist, der von der Querwelle (3) des nachgeschalteten Zahnrades (2) getragen wird und so angeordnet ist, dass er sich auf dem Pfad der Auswurfansätze (26) der Förderarme (9, 10) befindet.

## Claims

1. Device for conveying products, in particular fruit, which is designed to provide transport of the said products, and selective discharge of the latter at unloading areas, and comprising:
- a plurality of conveyor carrier arms (9, 10), which are articulated on supports (7, 8) which are supported by a longitudinal endless chain (1), and are provided with units (27, 28) for maintenance of the said conveyor carrier arms in a position for transport of the products;
- means for release (34-36), which are designed to generate selectively tilting of the conveyor carrier arms (9, 10), for the purpose of discharge of the products supported by the latter in one of the unloading areas;
**characterized in that**, in the said conveyor device:
- each conveyor carrier arm (9, 10) is extended transversely by a hollow body (24) delimited by a peripheral edge (25), inside which there extends a longitudinal sleeve (31) which accommodates a longitudinal articulation shaft (33), which is integral with the support (7, 8), the said sleeve being connected to the peripheral edge (25) by a transverse flexible component (32) which can be deformed during a force of raising of the conveyor carrier arm (9, 10), disposed in its position for transport of the products; and
- the units for maintenance of the conveyor carrier arms (9, 10) in their position for transport of the products comprise a recess (27) which is provided in the body (24) of the said conveyor carrier arm, and a longitudinal pin (28) which is integral with the support (7, 8), and is disposed such as to be accommodated in the recess (27), in the position for transport of the conveyor carrier arms (9, 10), the said recess being disposed such as to release the pin (28) during deformation of the flexible unit (32), derived from a force of raising of the said conveyor carrier arms.

2. Conveyor device as claimed in claim 1, **characterized in that** the flexible unit of the conveyor carrier arms (9, 10) consists of a flexible plate (32), which is disposed such as to extend horizontally in the position for transport of the said conveyor carrier arms.

3. Conveyor device as claimed in either of claims 1 or 2, **characterized in that** the recess (27) is provided in the peripheral edge (25) of the body (24), on the inner side of the said body, at a portion of the said peripheral edge which is disposed in the upper part of the body (24), in the position for transport of the conveyor carrier arms (9, 10).

4. Conveyor device as claimed in claim 3, **characterized in that** the peripheral edge (25) of the body (24) of the conveyor carrier arms (9, 10) comprises an inclined flat ramp (30) for access to the recess (27).

5. Conveyor device as claimed in any one of the preceding claims, **characterized in that** the release means comprise:
- for each conveyor carrier arm (9, 10), a lower ejection heel (26), which projects beneath the body (24) of the said conveyor carrier arm; and
- at each unloading area, a cam (34) which is associated with pivoting means (36), which can make the cam tilt around a longitudinal axis, between an active position in which it is on the path of the ejection heels (26) of the conveyor carrier arms (9, 10) and gives rise to upward displacement of the said ejection heels, and initial tilting of the said conveyor carrier arms, and a passive position, in which the said cam permits passage of the ejection heel (26).

6. Conveyor device as claimed in any one of the preceding claims, in which the conveyor carrier arms (9, 10) comprise a central bar (21) which extends transversely relative to the endless chain (1), and a plurality of fingers (22, 23) which are disposed at right angles, and are distributed on both sides of the said central bar, **characterized in that**, in the said conveyor device, the body (24) of the said conveyor carrier arms extends into the extension of the central bar (21), and has substantially the same width as the latter.

7. Conveyor device as claimed in claim 6, **characterized in that** each support (7, 8) comprises, for each conveyor carrier arm (9, 10), a transverse slide (19) which can accommodate the body (24) of the said conveyor carrier arm, whilst permitting tilting of the latter.

8. Conveyor device as claimed in any one of the preceding claims, **characterized in that**:
- the endless chain (1) is guided on a guide rail (4) which is provided with a surface for travel of the said endless chain, and is supported by a longitudinal profiled section (16); and
- each support (7, 8) comprises a cover (16a, 16b) which is designed to accommodate the endless chain (1), and is provided with means (17a, 17b, 18) for locking the said support onto the endless chain.

9. Conveyor device as claimed in claim 8, **characterized in that** the means for locking the supports (7, 8) comprise a second cover (17a, 17b), which is disposed inside the first cover (16a, 16b), and has dimensions suitable to cover the guide rail (4), and, inside the said first cover, to delimit two lateral longitudinal spaces which are designed to accommodate the links of the endless chain (1).

10. Conveyor device as claimed in claim 9, **characterized in that** the second cover (17a, 17b) comprises outer catches (18) for locking the endless chain (1) inside longitudinal spaces which are delimited by the said second cover.

11. Conveyor device as claimed in any one of claims 8 to 10, **characterized in that** each support (7, 8) supports two conveyor carrier arms (9, 10), which extend transversely on both sides of the said support.

12. Conveyor device as claimed in claim 11, **characterized in that** each support (7, 8) comprises, on both sides of the cover (16a, 16b), transverse walls (20) which support the articulation shafts (33) for the conveyor carrier arms (9, 10).

13. Conveyor device as claimed in claims 7 and 12 in association, **characterized in that**, on each side of the cover (16a, 16b), each support (7, 8) comprises two transverse walls (20), which delimit a slide (19) for the conveyor carrier arm (9, 10).

14. Conveyor device as claimed in one of claims 11 and 12, **characterized in that** each support (7, 8) comprises an upper wall (11, 12) with the general shape of an inverted V, formed by two faces which are inclined transversely.

15. Conveyor device as claimed in claim 14, **characterized in that** the upper wall (11, 12) of each support (7, 8) comprises an axial longitudinal groove (13), the said conveyor device comprising a longitudinal guide rail (42) which extends beneath the lower edge of the endless chain (1), and is designed to be accommodated in the said groove of the supports.

16. Conveyor device as claimed in claims 6 and 8 in association, **characterized in that** the means for pivoting of the cams (34) comprise an electro-magnet (36), which is secured to the longitudinal profiled section (6) by means of a ring (37), which is provided with means (14) for detachable securing to the said profiled section.

17. Conveyor device as claimed in any one of the preceding claims, comprising two toothed wheels (2) upstream and downstream, for engagement of the endless chain (1), **characterized in that** for each conveyor line, it comprises a re-engagement disc (47, 48), which is supported by the transverse shaft (3) of the toothed wheel (2) downstream, and is disposed such as to be on the path of the conveyor carrier arms (9, 10).

18. Conveyor device as claimed in claims 5 and 17 in association, **characterized in that** it comprises, for each conveyor line, a disc (44, 45), which is provided with a peripheral strip of foam (46), which is supported by the transverse shaft (3) of the toothed wheel (2) downstream, and is disposed such as to be on the path of the ejection heels (26) of the conveyor carrier arms (9, 10).
